(19) Europäisches Patentamt
European Patent Office
Office européen des brevets

(11) EP 4 657 954 A1

(12) EUROPEAN PATENT APPLICATION
published in accordance with Art. 153(4) EPC

(43) Date of publication:
03.12.2025 Bulletin 2025/49

(21) Application number: 24747453.9

(22) Date of filing: 25.01.2024

(51) International Patent Classification (IPC):
H04W 72/21 (2023.01)   H04W 72/232 (2023.01)
H04L 1/08 (2006.01)   H04W 72/04 (2023.01)
H04W 72/231 (2023.01)

(52) Cooperative Patent Classification (CPC):
H04L 1/08; H04W 72/04; H04W 72/21;
H04W 72/231; H04W 72/232

(86) International application number:
PCT/KR2024/001172

(87) International publication number:
WO 2024/158218 (02.08.2024 Gazette 2024/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.01.2023 KR 20230009304

(71) Applicant: LG Electronics Inc.
Yeongdeungpo-gu
Seoul 07336 (KR)

(72) Inventors:
• KIM, Hyungtae
  Seoul 06772 (KR)
• KANG, Jiwon
  Seoul 06772 (KR)
• SHIM, Jaenam
  Seoul 06772 (KR)

(74) Representative: Plasseraud IP
104 Rue de Richelieu
CS92104
75080 Paris Cedex 02 (FR)

(54) **METHOD AND APPARATUS FOR UPLINK TRANSMISSION AND RECEPTION IN WIRELESS COMMUNICATION SYSTEM**

(57) Disclosed are a method and apparatus for uplink transmission and reception in a wireless communication system. The method, according to one embodiment of the present disclosure, may comprise the steps of: receiving configuration information related to uplink transmission from a base station, wherein the configuration information includes information about the number of repetitions for the uplink transmission; receiving DCI from the base station; and transmitting uplink to the base station on the basis of the DCI.

FIG.8

## Description

[Technical Field]

The present disclosure relates to a wireless communication system, and in more detail, relates to a method and an apparatus for transmitting and receiving uplink transmission in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving uplink transmission.

In addition, an additional technical object of the present disclosure is to provide a method and an apparatus for configuring/indicating uplink transmission for multiple transmission reception points (TRPs) and uplink transmission through multiple panels.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving configuration information related to uplink transmission from a base station, wherein the configuration information includes information on a repetition number for the uplink transmission; receiving downlink control information (DCI) from the base station; and performing the uplink transmission to the base station based on the DCI. For the uplink transmission, i) first information including first beam information for determining a spatial transmission filter of the uplink transmission and first power control parameter information related to power control of the uplink transmission and ii) second information including second beam information for determining a spatial transmission filter of the uplink transmission and second power control parameter information related to power control of the uplink transmission may be configured, and based on the repetition number, the uplink transmission may be performed in one of a first transmission method in which the uplink transmission is repeatedly transmitted in a plurality of transmission occasions (TOs) using one of the first information and the second information for each TO or a second transmission method in which the uplink transmission is multi-transmitted through a plurality of panels in a same frequency-time resource and the first information or the second information is applied to the uplink transmission for each panel.

A method performed by a base station in a wireless communication system according to an additional aspect of the present disclosure may include: transmitting configuration information related to uplink transmission to a user equipment (UE), wherein the configuration information includes information on a repetition number for the uplink transmission; transmitting downlink control information (DCI) to the UE; and receiving the uplink transmission from the UE based on the DCI. For the uplink transmission, i) first information including first beam information for determining a spatial transmission filter of the uplink transmission and first power control parameter information related to power control of the uplink transmission and ii) second information including second beam information for determining a spatial transmission filter of the uplink transmission and second power control parameter information related to power control of the uplink transmission may be configured, and based on the repetition number, the uplink transmission may be performed in one of a first transmission method in which the uplink transmission is repeatedly transmitted in a plurality of transmission occasions (TOs) using one of the first information and the second information for each TO or a second transmission method in which the uplink transmission is multi-transmitted through a plurality of panels in a same frequency-time resource and the first information or the second information is applied to the uplink transmission for each panel.

[Technical Effects]

According to an embodiment of the present disclosure, ambiguity can be prevented between the configuration for the multi-TRP uplink transmission method and the configuration for the uplink transmission method via multi-panels.

In addition, according to an embodiment of the present disclosure, signaling overhead can be reduced when configuring the multi-TRP uplink transmission method and the uplink transmission method via multi-panels.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a signaling procedure between a network and a UE for an uplink transmission and reception method according to an embodiment of the present disclosure.
FIG. 8 illustrates an operation of a UE for an uplink transmission and reception method according to an embodiment of the present disclosure.
FIG. 9 illustrates an operation of a base station for an uplink transmission and reception method according to an embodiment of the present disclosure.
FIG. 10 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI (Artificial Intelligence) system/module, an RSU(road side unit), a robot, a drone (UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11 (Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214 (physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement

- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

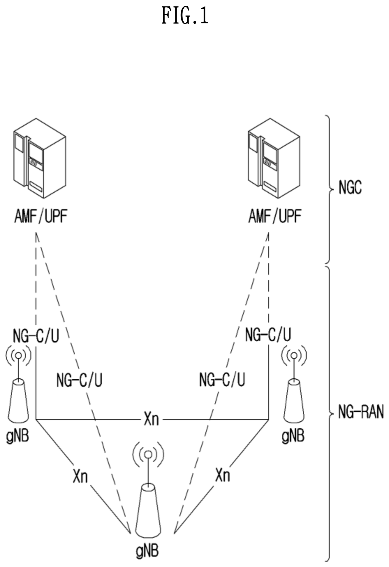

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

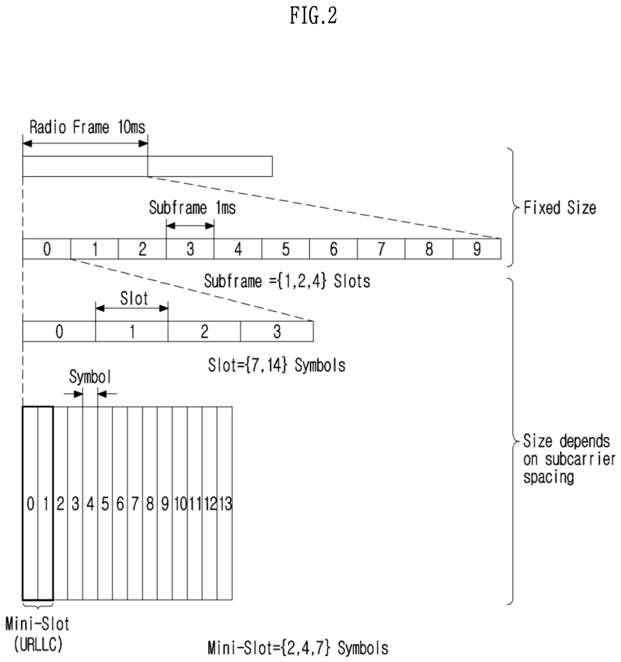

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - | 60, 120, |
| | 52600MHz | 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0, ..., N_{slot}^{subframe,\mu}-1\}$ in a subframe and are numbered in an increasing order of $n_{s,f}^\mu \in \{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| μ | $N_{symb}^{slot}$ | $N_{slot}^{frame,\mu}$ | $N_{slot}^{subframe,\mu}$ |
|---|---|---|---|
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

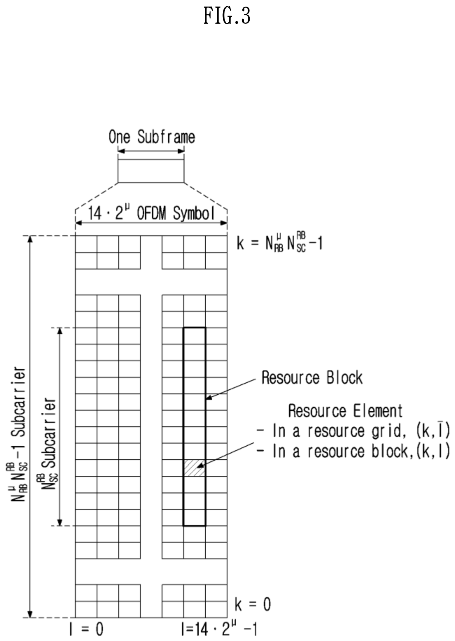

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l') . Here, k=0,..., $N_{RB}^{\mu}N_{sc}^{RB}$-1 is an index in a frequency domain and l' =0, ..., $2^{\mu}N_{symb}^{(\mu)}$-1 refers to a position of a symbol in a subframe. When referring to a resource element in a slot, an index pair (k, l) is used. Here, l=0, ... , $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A.

Physical resource blocks are numbered from 0 to $N_{Bwp,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

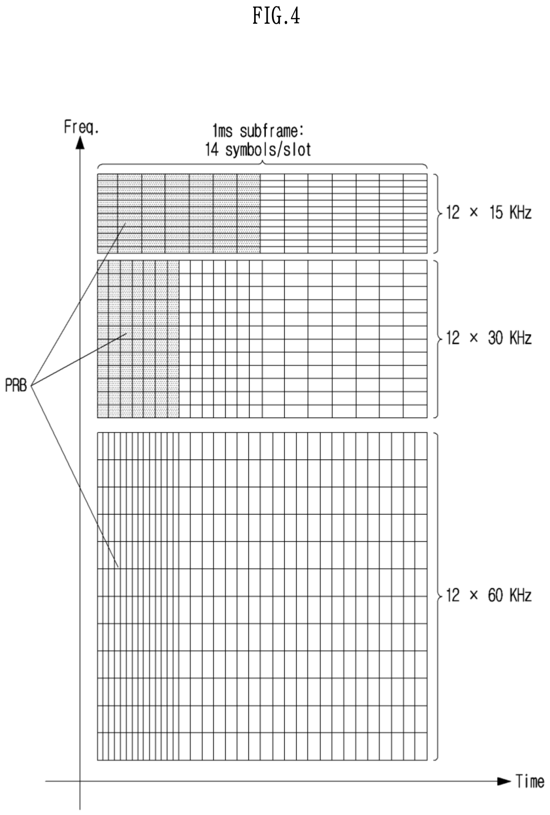

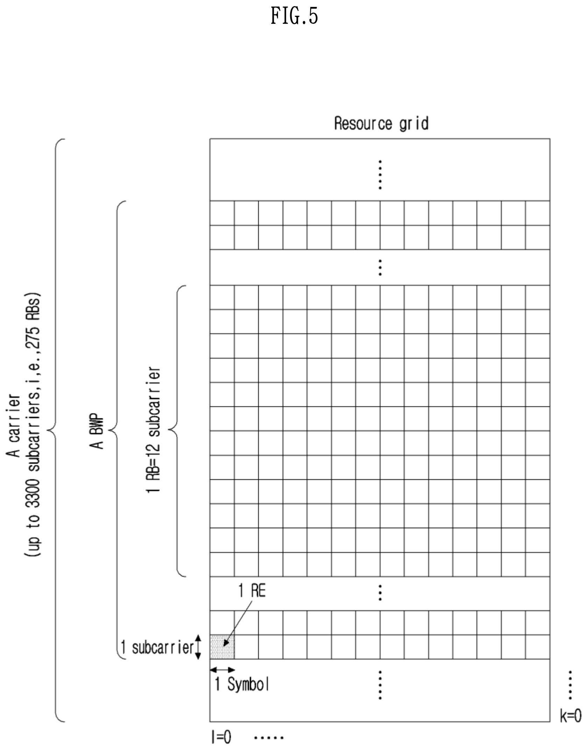

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

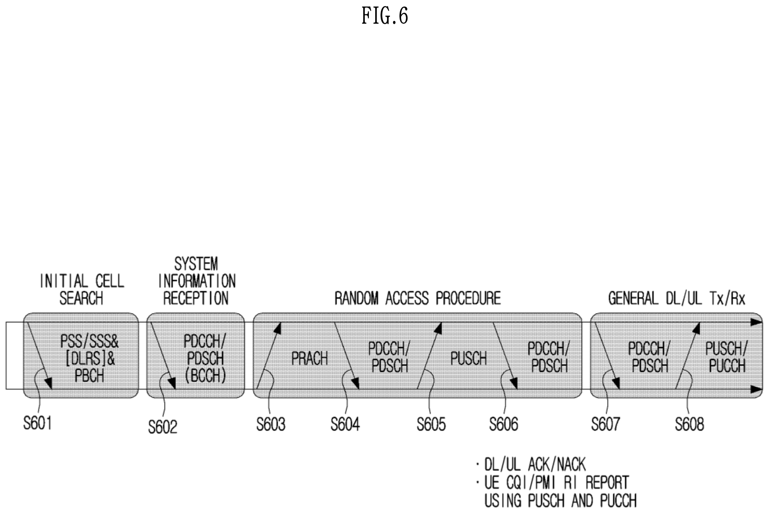

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI (New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(singleDCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

A UE may recognize PUSCH (or PUCCH) scheduled by DCI received in different control resource sets(CORESETs) (or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex).

The Rel-17 NR standard supports (1) MTRP PDCCH repeat transmission, (2) MTRP PDCCH single frequency network (SFN) transmission, (3) MTRP PDSCH SFN transmission, (4) MTRP PUSCH repeat transmission based on S-DCI, and (4) MTRP PUCCH repeat transmission based on single PUCCH resource. All of these transmission techniques are URLLC target enhancements for increasing reliability, and the same contents (i.e., DCI or UL/DL TB or UCI) are repeatedly transmitted. In the case of MTRP PDCCH repeat transmission, it is repeatedly transmitted in TDM or FDM, MTRP PDCCH/PDSCH SFN is repeatedly transmitted at the same time/frequency/layer, S-DCI-based MTRP PUSCH repeat transmission is repeatedly transmitted in TDM, and single PUCCH resource-based MTRP PUCCH repeat transmission is repeatedly transmitted in TDM.

(1) MTRP PDCCH Repeat Transmission

For MTRP PDCCH repeat transmission, multiple CORESETs with different TCI states (i.e., different QCL RSs) are configured to a UE, and multiple SS sets each connected/associated to the corresponding CORESETs are configured to the UE. A base station indicates/configures a UE that a search space set (SS set) associated to one CORESET and an SS set associated to another CORESET are linked for repeat transmission, so that the UE can know that PDCCH candidates of the corresponding SS set are repeatedly transmitted.

For example, it is assumed that two CORESETs, CORESET 0 and 1, are configured to a UE, and CORESET 0 and 1 are associated to SS set 0 and 1, respectively, and that SS set 0 and 1 are linked. The UE can recognize that a PDCCH candidate of SS set 0 and a PDCCH candidate of SS set 1 are repeatedly transmitting the same DCI, and through a specific rule, and the UE can recognize that a specific PDCCH candidate of SS set 0 and a specific PDCCH candidate of SS set 1 are a pair established for repeatedly transmitting the same DCI. These two PDCCH candidates are referred to as linked PDCCH candidates, and a UE can successfully decode the corresponding DCI if it correctly receives either of the two PDCCH candidates. However, when receiving the PDCCH candidate of SS set 0, a QCL RS (i.e., DL beam) of a TCI state of COERSET 0 associated to SS set 0 is used, and when receiving the PDCCH candidate of SS set 1, a QCL RS (i.e., DL beam) of a TCI state of COERSET 1 associated to SS set 1 is used, thereby receiving the linked PDCCH candidates with different beams.

(2) MTRP SFN PDCCH Repeat Transmission

As a special case of MTRP PDCCH repeat transmission, multiple TRPs can repeatedly transmit the same DCI through the same time/frequency/DMRS port, which can be referred to as SFN PDCCH transmission. However, for SFN PDCCH transmission, instead of configuring multiple CORESETs with different TCI states to a UE, a base station sets multiple TCI states to one CORESET. When a UE receives a PDCCH candidate through a SS set associated to one CORESET, it performs channel estimation of a PDCCH DMRS using all of the multiple TCI states and attempts to decode.

(3) MTRP SFN PDSCH Repeat Transmission

When the MTRP PDSCH is repeatedly transmitted, two TRPs repeatedly transmit a corresponding PDSCH on different resources. However, as a special case, if a resource used by two TRPs are the same, that is, if the same channel is repeatedly transmitted through the same frequency, time, and layer (i.e., DMRS port), the reliability of the corresponding channel can be improved. In this case, the same channel that is repeatedly transmitted is received by combining it in the air because the resources are not distinguished, so it is recognized as one channel from the receiver's perspective. For PDSCH SFN transmission, two DL TCI states for PDSCH DMRS reception can be configured.

(4) S-DCI based MTRP PUSCH repeat transmission

For S-DCI based MTRP PUSCH transmission, a base station configured two SRS sets to the UE, where each set is used to indicate a UL Tx port and UL beam/QCL information toward TRP 1 and TRP 2, respectively. In addition, a base station performs SRS resource indication for each SRS set through two SRI fields in one DCI, and can indicate up to two power control (PC) parameter sets. For example, the first SRI field can indicate an SRS resource and a PC parameter set defined in SRS set 0, and the second SRI field can indicate an SRS resource and a PC parameter set defined in SRS set 1. A UE is indicated with UL Tx port, PC parameter set, and UL beam/QCL information toward TRP 1 through the first SRI field, and performs PUSCH transmission at the transmission occasion (TO) corresponding to SRS set 0 through these. Similarly, a UE is indicated with UL Tx port, PC parameter set, and UL beam/QCL information toward TRP 2 through the second SRI field, and performs PUSCH transmission in the TO corresponding to SRS set 1. Similarly, a UE is instructed with the UL Tx port, PC parameter set, and UL beam/QCL information toward TRP 2 through the second SRI field, and performs PUSCH transmission in the TO corresponding to SRS set 1. Here, the TO corresponding to SRS set 0,1 is determined by one of the mapping methods configured by a base station among cyclic (beam) mapping and sequential (beam) mapping. For example, in the case of cyclic beam mapping, SRS set 0 and SRS set 1 are mapped alternately in TO order. For example, if TO=4, TOs 1,2,3,4 are mapped to SRS sets 0, 1, 0, 1, respectively. On the other hand, sequential beam mapping maps one SRS set to two adjacent TOs, and then another SRS set to the next two adjacent TOs. For example, when TO=8, TOs 1,2,3,4,5,6,7,8 are mapped to SRS sets 0,0, 1,1, 0,0, 1,1, respectively. This mapping method is also applied to PUCCH repetition.

In addition to a SRI field, transmit PMI (TPMI), phase tracking reference signal (PTRS), and transmission power control (TPC) fields can also be indicated for each TRP, so that the existing one field has been expanded to two fields. In addition, by introducing a 2-bit SRS resource set indication field, STRP PUSCH repeat transmission can be performed by selecting a specific one of the two SRS sets, and MTRP PUSCH repeat transmission can be performed by selecting both. That is, if the field is 00, 01, SRS set 0 and SRS set 1 are indicated respectively, and STRP PUSCH transmission corresponding to each SRS set is performed, and if it is 10, (SRS set 0, SRS set 1) is indicated, and MTRP PUSCH transmission is performed in the indicated order of SRS set pairs. That is, set 0 corresponds to the first PUSCH TO. In the case of 11, (SRS set 1, SRS set 0) is indicated, and MTRP PUSCH transmission is performed in the order in which the set pairs are indicated. That is, set 1 corresponds to the first PUSCH TO.

(5) MTRP PUCCH repeated transmission based on a single PUCCH resource

A base station activates/configures two spatial relation information in a single PUCCH resource for a UE for MTRP PUCCH transmission based on a single PUCCH resource. In this case, two PC (power control) parameter sets can be activated/configured in the case of FR1. When a UE transmits UL UCI through the corresponding PUCCH resource, each spatial relation info is used to indicate spatial relation info toward TRP 1 and TRP 2, respectively. For example, a UE is indicated Tx beam/PC parameters toward TRP 1 through a value indicated in a first spatial relation info, and the UE performs PUCCH transmission in a TO corresponding to TRP 1 using this information. Similarly, a UE is indicated Tx beam/PC parameters toward TRP 2 through a value indicated in a second spatial relation info, and the UE performs PUCCH transmission in a TO corresponding to TRP 2 using this information.

In addition, for MTRP PUCCH repeat transmission, a configuration method has been improved so that two spatial relation info can be configured in the PUCCH resource. That is, if PC parameters such as PLRS, Alpha, P0, and Closed loop index are set for each spatial relation info, spatial relation RS can be configured. As a result, PC information and spatial relation RS information corresponding to two TRPs can be configured through two spatial relation info, UE transmits UCI (i.e., CSI, HARQ-ACK, scheduling request (SR)) in a PUCCH using the first spatial relation info in TO 1, and transmits the same UCI (i.e., CSI, HARQ-ACK, SR) in a PUCCH using the second spatial relation info in TO 2. In the present disclosure, a PUCCH resource with two spatial relation information set is referred to as an MTRP PUCCH resource, and a PUCCH resource with one spatial relation information set is referred to as a STRP PUCCH resource.

In the methods proposed in this disclosure, using (/mapping) a specific TCI state (or TCI) when receiving data/DCI/UCI for a certain frequency/time/space resource may mean that in the case of DL, a channel is estimated from a DMRS using a QCL type and QCL RS indicated by a corresponding TCI state in the frequency/time/space resource, and data/DCI is received/demodulated with the estimated channel. In the case of UL, it can mean that a DMRS and data/UCI are transmitted/modulated using a Tx beam and/or Tx power indicated by a corresponding TCI state in the frequency/-time/space resource.

The UL TCI state includess Tx beam and/or Tx power information of a UE, and may be configured for the UE through other parameters such as spatial relation info instead of a TCI state. A UL TCI state may be directly indicated in UL grant DCI, or may mean spatial relation info of an SRS resource indicated through an SRS resource indicator (SRI) field of UL grant DCI. Alternatively, it may mean an open loop (OL) Tx power control parameter (j: index for open loop parameter Po and alpha (up to 32 parameter value sets per cell), q_d: index of DL RS for path loss (PL) measurement (up to 3 measurements per cell), l: closed loop power control process index (up to 2 processes per cell)) linked to a value indicated via an SRI field of UL grant DCI.

In addition, in Rel-17, not only a DL TCI state but also a UL TCI state can be indicated through DL DCI (e.g., DCI format 1-1 or 1-2), or only a UL TCI state can be indicated without a DL TCI state indication. Therefore, the methods used for UL beam and PC (power control) configuration in existing Rel-15/16 are replaced in R-17 with the UL TCI state indication method. More specifically, in R17, one UL TCI state can be indicated through a TCI field of DL DCI, and the corresponding UL TCI state is applied to all PUSCHs and all PUCCHs after a certain time called beam application time, and can be applied to some or all of the indicated SRS resource sets.

Meanwhile, Rel-18 discusses a method for UEs to simultaneously transmit multiple channels/reference signals (RS) of the same type or multiple channels/RSs of different types. In the case of existing UEs, an operation of transmitting multiple channels/RS at one time is restricted (e.g., it is possible to simultaneously transmit multiple SRS resources of different SRS sets for UL beam measurement, but it is impossible to simultaneously transmit multiple PUSCHs), however in the case of advanced UEs in the future, this restriction will be relaxed and multiple channels or RSs can be transmitted simultaneously using multiple transmission panels, and this transmission method can be referred to as simultaneous transmission across multiple panels (STxMP), and such UEs can also be referred to as STxMP UEs. For example, two PUSCHs corresponding to two UL TBs are scheduled on the same resource, and spatial relation RS 1 and PC parameter set 1 (i.e., UL TCI state 1) and spatial relation RS 2 and PC parameter set 2 (i.e., UL TCI state 2) can be configured for PUSCH 1 and 2 transmission, respectively. In this case, a UE can transmit PUSCH 1 using panel 1 corresponding to UL TCI state 1, and simultaneously transmit PUSCH 2 using panel 2 corresponding to UL TCI state 2.

When a base station schedules a PUSCH through DCI, it can indicate whether the PUSCH will be transmitted as STxMP, single panel, MTRP PUSCH repetition, etc. Of course, a UE must have STxMP capability and the STxMP mode must be enabled in advance through RRC signaling, etc. For this purpose, the existing SRS resource set indication field can be redefined and used, or a new DCI field can be introduced.

For convenience of explanation, this disclosure assumes cooperative transmission/reception between 2 TRPs and applies the proposed method, but it can be expanded to a multi-TRP environment of 3 or more, and can be expanded to a multi-panel environment. Different TRPs can be recognized by a UE as different TCI states, and when a UE receives/transmits data/DCI/UCI using TCI state 1, it means that the UE receives/transmits data/DCI/UCI from/to TRP 1.

In the present disclosure, a transmission occasion (TO) may mean each channel transmitted at a different time when multiple channels are TDMed, or each channel transmitted on a different frequency/RB when FDMed, or each channel transmitted on a different layer/beam/DMRS port when SDMed. One TCI state may be mapped to each TO. When the same channel is repeatedly transmitted, a complete DCI/data/UCI is transmitted to one TO, and a receiving end may receive multiple TOs to increase the reception success rate.

Simultaneous transmission across multi-panel (STxMP)

Rel-18 is discussing the introduction of a method for UEs to simultaneously transmit multiple channels/reference signals (RSs) of the same type or multiple channels/RSs of different types. In the case of existing UEs, the operation of transmitting multiple channels/RSs at one time (i.e., the same time resource) is restricted (for example, it is possible to simultaneously transmit multiple SRS resources of different SRS resource sets for UL beam measurement, however it is impossible to simultaneously transmit multiple PUSCHs), however this restriction may be relaxed in the case of advanced UEs in the future, and advanced UEs in the future may simultaneously transmit multiple channels or RSs using multiple transmit panels. This operation may be referred to as simultaneous transmission across multi-panels (STxMP), and a UE supporting this operation may be referred to as an STxMP UE. For example, two PUSCHs (PUSCH 1, 2) corresponding to (carrying) two UL TBs may be scheduled in the same resource element (RE) (or the same plurality of REs), and spatial relation RS (RS) 1 and power control (PC) parameter set 1 (i.e., UL TCI state 1) and spatial relation RS 2 and PC parameter set 2 (i.e., UL TCI state 2) may be configured for transmission of PUSCHs 1 and 2, respectively. The UE may transmit PUSCH 1 using panel 1 corresponding to UL TCI state 1, and simultaneously transmit PUSCH 2 using panel 2 corresponding to UL TCI state 2.

When scheduling a PUSCH through DCI, a base station can indicate whether the PUSCH will be transmitted as STxMP, transmitted as a single panel, or transmitted as M-TRP PUSCH repetition. In this case, a UE must have STxMP capability, and the STxMP mode (e.g., SDM method/mode or SFN method/mode) may be enabled in advance by higher layer signaling (e.g., RRC signaling). For this, the existing SRS resource set indication field may be redefined and used, or a new DCI field may be introduced.

Two methods are being considered for the Rel-18 STxMP transmission technique: single frequency network (SFN) and spatial division multiplexing (SDM).

The SFN method is a method in which the same channel (or RS) transmitted by one panel is transmitted by another panel. However, since the UL channel (or RS) of each panel is different, it is transmitted by different precoder, different transmission power, and different transmission beam (i.e., spatial relation RS indicated by UL TCI) for each panel in consideration of this.

The SDM method is a method that can be transmitted from rank 2 or higher, in which some of the multi-layers are transmitted by panel 1 and the remaining layers are transmitted by panel 2. For example, in 2-layer transmission, the first layer can be transmitted by panel 1 and the second layer can be transmitted by panel 2. In this case as well, since the UL channel of each panel is different, it is transmitted by different precoder, different transmission power, and different transmission beam (i.e., spatial relation RS indicated by UL TCI) for each panel in consideration of this.

Method for configuring uplink/downlink transmission scheme

The present disclosure proposes a method for configuring uplink/downlink transmission schemes. Hereinafter, for convenience of explanation in the present disclosure, the proposed method is explained mainly by exemplifying PUCCH transmission, but the present disclosure is not limited thereto, and can be equivalently applied to various uplink transmissions (e.g., PUSCH transmission, etc.) other than PUCCH transmission, and can also be applied to downlink transmissions (e.g., PDCCH transmission, PDSCH transmission, etc.).

The method for indicating the repetition number for PUCCH transmission is as follows.

1) In the case of a repetition number indication method for PUCCH transmission defined in Rel-16, the repetition number can be configured/indicated for each PUCCH format. In other words, the number of slots ($N_{PUCCH}^{repeat}$) for repetitions of PUCCH transmission (e.g., a higher layer parameter nrofSlots) for each PUCCH format in a configuration for PUCCH (e.g., PUCCH-config) may be individually configured for the UE. Here, the higher layer parameter nrofSlots indicates the number of slots for the same PUCCH (e.g., n2 (2 slots), n4 (4 slots), n8 (8 slots)), and if this parameter/field is not present, the UE applies n1 (i.e., 1 transmission in 1 slot). In this case, the UE repeats PUCCH transmission for uplink control information (UCI) over $N_{PUCCH}^{repeat}$ (e.g., nrofSlots) slots.

For example, if 64 PUCCH resources (PUCCH resources 0 to 63) are configured for a UE, it is assumed that PUCCH resources 0 to 31 are configured to PUCCH format 0 and the remaining PUCCH resources are configured to PUCCH format 1. In this case, since the above-described nrofSlots is configured/indicated for each PUCCH format, the repetition number configured for PUCCH format 0 (i.e., nrofSlots for PUCCH format 0) (e.g., by RRC signaling) is commonly applied to PUCCH resources 0 to 31, and the repetition number configured for PUCCH format 1 (i.e., nrofSlots for PUCCH format 1) is commonly applied to the remaining PUCCH resources.

2) In the case of the method for indicating the repetition number for PUCCH transmission defined in Rel-17, the repetition number can be individually (or differently) configured for each PUCCH resource by higher layer signaling (e.g., RRC signaling). The repetition number configured for each PUCCH resource is applied to each PUCCH resource. In other words, the UE can be indicated to transmit a PUCCH over $N_{PUCCH}^{repeat}$ slots using the PUCCH resource. Here, if the PUCCH resource is indicated by the DCI format and includes the higher layer parameter pucch-RepetitionNrofSlots (i.e., the higher layer parameter pucch-RepetitionNrofSlots is configured for the corresponding PUCCH resource), $N_{PUCCH}^{repeat}$ is provided by the higher layer parameter pucch-RepetitionNrofSlots. Otherwise, $N_{PUCCH}^{repeat}$ is provided by the higher layer parameter nrofSlots. Here, the higher layer parameter pucch-RepetitionNrofSlots corresponds to the configuration of PUCCH repetition factor per PUCCH resource associated with scheduling DCI corresponding to Rel-17 dynamic PUCCH repetition. For a PUCCH resource, if both the higher layer parameter pucch-RepetitionNrofSlots and the higher layer parameter nrofSlots exist, the higher layer parameter nrofSlots is ignored and the higher layer parameter pucch-RepetitionNrofSlots is applied. If the higher layer parameter pucch-RepetitionNrofSlots is not present in the PUCCH resource associated with the scheduling DCI, the UE applies the value of the higher layer parameter nrofSlots.

Therefore, when the base station dynamically indicates a PUCCH resource for ACK (acknowledgement)/NACK (negative acknowledgement) transmission (e.g., when indicated based on a PUCCH resource indicator (PRI) field in the DCI), the base station can dynamically indicate a PUCCH repetition number by selecting a PUCCH resource to which a desired repetition number is configured.

However, in case of periodic/semi-persistent PUCCH transmission, even if a repetition number (i.e., a higher layer parameter pucch-RepetitionNrofSlots) is configured for the corresponding PUCCH resource, it is ignored and the repetition number (i.e., a higher layer parameter nrofSlots) corresponding to the PUCCH format to which the corresponding PUCCH resource belongs is applied according to the Rel-16 method described above.

Hereinafter, in the present disclosure, the repetition number for a PUCCH resource means the number of repetitions configured for a PUCCH resource used by a UE to transmit UCI, which may be configured by the above-described higher layer parameter pucch-RepetitionNrofSlots or nrofSlots, however the present disclosure is not limited thereto. That is, for example, the repetition number for a PUCCH resource may be configured by a newly defined higher layer parameter other than the above-described higher layer parameter pucch-RepetitionNrofSlots or nrofSlots, or may be configured dynamically (for example, by DCI).

The present disclosure proposes a method for a base station to indicate a UE whether to apply STxMP PUCCH transmission and/or a method for indicating switching/changing with another PUCCH transmission method.

The following four methods can be considered as PUCCH transmission methods.

1) Single TRP (STRP) PUCCH transmission without repetition

In the most basic transmission method, a PUCCH is transmitted once without repetition. To this end, a base station may configure the repetition number for the corresponding PUCCH resource to 1 (e.g., by the higher layer parameter pucch-RepetitionNrofSlots or nrofSlots) or may not configure the value of the repetition number. In addition, since a PUCCH is transmitted as STRP, only one UL beam and one UL power control (PC: power control) (parameter) set (e.g., pathloss RS, P0, alpha, closed loop index, etc.) information can be configured to be suitable for one channel corresponding to STRP.

Hereinafter, in the description of the present disclosure, a UL beam may be interpreted equivalently to a spatial domain filter used to transmit a UL channel. That is, a PUCCH may be transmitted using the same spatial domain filter for reception of a reference RS indicated by spatial relation info and/or a TCI state by higher layer signaling described below. Accordingly, configuring of a UL beam may be interpreted equivalently to configuring of spatial relation info and/or a TCI state.

That is, in the case of STRP PUCCH transmission without repetition, i) the repetition number is not configured or is configured to 1, and ii) UL beam and PC (parameter) set are configured to 1.

2) STRP PUCCH repetition

The STRP PUCCH transmission without repetition described above has the same configuration as the beam and PC (parameter) set, however the repetition number for the corresponding PUCCH resource where the PUCCH is to be transmitted is configured to 2 or more.

That is, in the case of STRP PUCCH repetition, i) the repetition number is configured to 2 or more, and ii) UL beam and PC (parameter) set are configured to 1.

3) Multi-TRP (MTRP) PUCCH repetition

The base station configures the repetition number for the corresponding PUCCH resource to which the PUCCH is to be transmitted to 2 or more. In addition, since it is transmitted as MTRP, multiple channels corresponding to the MTRP (for example, since Rel-17 supports up to 2 TRPs, in this case, the multiple channels can mean 2 channels.) can be configured for the UE with multiple (for example, two) UL beams (for example, UL beam 1, UL beam 2) and two UL power control sets (for example, pathloss RS, P0, alpha, closed loop index, etc.) (for example, UL PC set 1, UL PC set 2) information. The PUCCH is repeatedly transmitted for transmission occasions (TOs) (i.e., transmission occasions of PUCCHs that are repeatedly transmitted at different times) as many as the repetition number determined by the configured method, and the beam/PC set is determined for each TO. Here, the mapping method between the beam/PC set and the TO can be preconfigured by higher layer signaling, and the beam/PC set can be determined for each TO by applying the mapping method between the configured beam/PC set and the TO. For example, if the cyclic mapping method is set to 4 and the repetition number is 4, beam 1, beam 2, beam 1, and beam 2 are applied in time order for four TOs.

That is, in the case of MTRP PUCCH repetition, i) the repetition number is configured to 2 or more, and ii) multiple UL beam and PC (parameter) sets are configured.

4) STxMP PUCCH transmission

The currently agreed STxMP PUCCH transmission method is a single frequency network (SFN) STxMP. This method is a method in which a UE transmits the same PUCCH at the same time and frequency to the same layer through two panels. Accordingly, for the convenience of explanation, the proposed method of the present disclosure is described assuming SFN STxMP PUCCH transmission, but the proposed method of the present disclosure can be applied equally to other STxMP transmission methods (e.g., SDM STxMP transmission method).

In the case of STxMP transmission, since a PUCCH is transmitted through two different panels, the UL channel is different for each panel. Therefore, the UL beam and UL power control optimized for the UL channel of each panel can be different, so two UL beams and UL powers need to be configured for PUCCH resources like the MTRP PUSCH transmission method.

According to one embodiment of the present disclosure, a STRP transmission scheme (i.e., a STRP transmission scheme without repetition or a STRP PUCCH repetition) and a STxMP transmission scheme (or can be distinguished according to the number of UL beams and UL PC (parameter) sets (i.e., whether single or multiple) by a base station. That is, the STRP transmission scheme of PUCCH and the STxMP transmission scheme of PUCCH can be distinguished according to the number of UL beams and UL PC (parameter) sets configured for a PUCCH resource on which the PUCCH is to be transmitted.

However, since both the MTRP transmission method (i.e., the MTRP PUCCH repetition described above) and the STxMP transmission method are configured with multiple UL beams and PC (parameter) sets, they cannot be distinguished in this way. That is, if multiple UL beams and PC (parameter) sets are configured for a PUCCH resource on which a PUCCH is to be transmitted, it is difficult for the UE to clearly distinguish whether the PUCCH will be transmitted in the MTRP repetition method or the STxMP method on the corresponding PUCCH resource.

Therefore, the present disclosure proposes a method for distinguishing whether to transmit in the MTRP repetition method or the STxMP method according to the repetition number for the corresponding PUCCH resource.

For example, if the repetition number for the corresponding PUCCH resource is configured to 2 or more, the UE may apply the MTRP transmission scheme to the corresponding PUCCH resource, otherwise (i.e., if the repetition number is configured to 1) (or even if there is no repetition number configuration), the UE may apply the STxMP transmission scheme to the corresponding PUCCH resource. Here, the repetition number of the PUCCH resource may be configured to the repetition number configured in the PUCCH format of the corresponding PUCCH resource by applying the above-described Rel-16 scheme (i.e., configured by the higher layer parameter nrofSlots), or may be configured to the repetition number configured for the corresponding PUCCH resource by applying the above-described Rel-17 scheme (i.e., set by the higher layer parameter pucch-RepetitionNrofSlots).

There are three ways to configure the PUCCH UL beam and UL power control (PC) parameter set as follows:

1) R17 PUCCH spatial relation information configuration method

Spatial relation info (i.e., higher layer parameter PUCCH-SpatialRelationInfo) can be configured for each PUCCH resource via RRC signaling. In Rel-16, one spatial relation info can be configured for each PUCCH resource, and in Rel-17, two spatial relation info can be configured for each resource for MTRP PUCCH transmission. Here, a higher layer parameter PUCCH-SpatialRelationInfo may be provided via RRC signaling for a PUCCH resource, and may be activated by an activation command for PUCCH-SpatialRelationInfo (e.g., PUCCH spatial relation Activation/Deactivation MAC CE (control element), Enhanced PUCCH Spatial Relation Activation/Deactivation MAC CE). In addition, multiple spatial relation info for a PUCCH resource may be provided/activated, for example, via PUCCH spatial relation Activation/Deactivation for multiple TRP PUCCH repetition MAC CE.

Spatial relation info is used to configure spatial settings for PUCCH transmission and parameters for PUCCH power control. In the spatial relation info, UL beam information called reference RS (i.e., higher layer parameter referenceSignal) and PC (parameter) set (i.e., higher layer parameter pucch-PathlossReferenceRS, higher layer parameter p0-PUCCH-Id, higher layer parameter closedLoopIndex) are configured. Here, the reference RS can be configured as a synchronization signal block (SSB) index, a CSI-RS index, or a sounding reference signal (SRS) resource ID (identifier). If spatial settings for PUCCH transmission by a UE are provided by the spatial relation info, the UE applies the corresponding spatial settings to a spatial domain filter in order to transmit a PUCCH. If SpatialRelationInfo provides SSB index, UE transmits the PUCCH using the same spatial domain filter for reception of SS/PBCH block having the corresponding SSB index. Alternatively, if SpatialRelationInfo provides CSI-RS index, UE transmits the PUCCH using the same spatial domain filter for reception of CSI-RS having the corresponding CSI-RS index. Alternatively, if SpatialRelationInfo provides SRS resource, the PUCCH is transmitted using the same spatial domain filter for SRS transmission having the corresponding SRS resource index.

In addition, the UE determines the PUCCH transmission power based on the PC (parameter) set in the spatial relation info.

Here, if multiple (for example, 2) spatial relation info are configured for the PUCCH resource to be transmitted (for example, by PUCCH spatial relation Activation/Deactivation for multiple TRP PUCCH repetition MAC CE), the UE may apply MTRP or STxMP transmission scheme for PUCCH transmission in the corresponding PUCCH resource. In this case, according to the proposed method of the present disclosure, the UE may finally select one of the MTRP or STxMP transmission schemes for PUCCH transmission in the corresponding PUCCH resource based on the repetition number for the corresponding PUCCH resource.

2) Rel-18 unified transmission configuration indicator (TCI) indication

A UE may be configured with a unified TCI state type configured for a serving cell by higher layer signaling (e.g., unifiedTCI-StateType). That is, DL TCI state and UL TCI state may be configured separately accordingly, or a joint TCI state for UL and DL operations may be configured. If a joint TCI state is configured, the UE may be configured with a TCI state list (e.g., a higher layer parameter dl-OrJointTCI-StateList) for providing reference signals for QCL for a DM-RS of a PDSCH and a DM-RS of a PDCCH, and also for determining UL transmission spatial filters for a dynamic-grant/configured-grant PUSCH and a PUCCH. If dl-OrJointTCI-StateList including one TCI state is configured, the UE can obtain QCL assumption for a DM-RS of a PDSCH and a DM-RS of a PDCCH from the indicated TCI state and a CSI-RS applying the indicated TCI state, and also determine UL transmission spatial filter for a dynamic-grant/configured-grant PUSCH and a PUCCH and an SRS applying the indicated TCI state from the indicated TCI state. On the other hand, if dl-OrJointTCI-StateList including up to 128 TCI states is configured, a TCI state can be indicated by a transmission configuration indication field of DCI. Here, when a UE configured with dl-OrJointTCI-StateList transmits a PUCCH or PUSCH carrying UCI (e.g., HARQ-ACK) corresponding to DCI carrying a transmission configuration indication field or corresponding to a PDSCH scheduled by the DCI, the TCI state indicated by the transmission configuration indication field is applied.
That is, if the TCI state provides an SSB index, the UE transmits a PUCCH using the same spatial domain filter for reception of an SS/PBCH block having the corresponding SSB index. Alternatively, if the TCI state provides a CSI-RS index and the corresponding TCI state provides a CSI-RS configured with a QCL type set to typeD, the UE transmits a PUCCH using the same spatial domain filter for reception of the CSI-RS having the corresponding CSI-RS index. Alternatively, if the TCI state provides an SRS resource, the UE transmits a PUCCH using the same spatial domain filter for SRS transmission having the corresponding SRS resource index.
According to the current agreement, for each PUCCH resource, whether to apply both (UL) TCI states or only one specific (UL) TCI state (e.g., the first TCI state or the second TCI state) for two (UL) TCI states indicated by DCI (e.g., indicated by the transmission configuration indication field) is configured by RRC signaling. Here, in the PUCCH resource configured to apply both (UL) TCI states, the UE can transmit the PUCCH in the MTRP or STxMP manner. In this case, based on the repetition number for the corresponding PUCCH resource according to the proposed method of the present disclosure, the UE can finally select one of the MTRP or STxMP transmission manners for the PUCCH transmission on the corresponding PUCCH resource.

3) Rel-17 Unified TCI indication

In the Rel-17 Unified TCI indication, multiple UL TCI states cannot be configured, and only one can be configured, and the set UL TCI state is commonly applied to all PUCCH resources. That is, in the Rel-17 Unified TCI indication, MTRP or STxMP transmission methods cannot be used for PUCCH transmission.
In the proposed method of the present disclosure, the repetition number used to determine which of the MTRP transmission method and the STxMP transmission method to use for PUCCH transmission means the nominal repetition number, however may mean the actual repetition number in some cases. For example, after the base station calculates/determines the (nominal) transmission opportunity (TO) according to the (nominal) repetition number configured by the proposed method, some or all symbols of a specific TO may be invalid symbols that are impossible for transmission. In this case, the transmission occasion may be dropped without actually being transmitted UL, or one TO may be divided into multiple actual TOs due to the invalid symbols. The actual TO that considers the invalid UL symbols in this way is referred to as an actual TO, and the number of actual TOs corresponds to the actual repetition number. For example, if the nominal repetition number is indicated as 2 or more, but a specific TO is dropped due to invalid symbol(s) and the number of TOs is determined to be 1 (i.e., the actual repetition number is 1), the UE can transmit a PUCCH in the corresponding TO (i.e., the actual TO) using the STxMP transmission mode. As another example, if the nominal repetition number is indicated as 1, however the corresponding TO is divided into multiple TOs due to invalid symbol(s) and the number of TOs is determined to be 2 or more (i.e., the actual repetition number is 2 or more), the UE can transmit a PUCCH in the MTRP repetition transmission mode in the corresponding TOs (i.e., the actual TOs) .
The parameter(s) described in the proposed method of the present disclosure described above, whether to apply the proposed method, etc. may be indicated by the base station to the UE, reported by the UE to the base station, or configured to a fixed value.

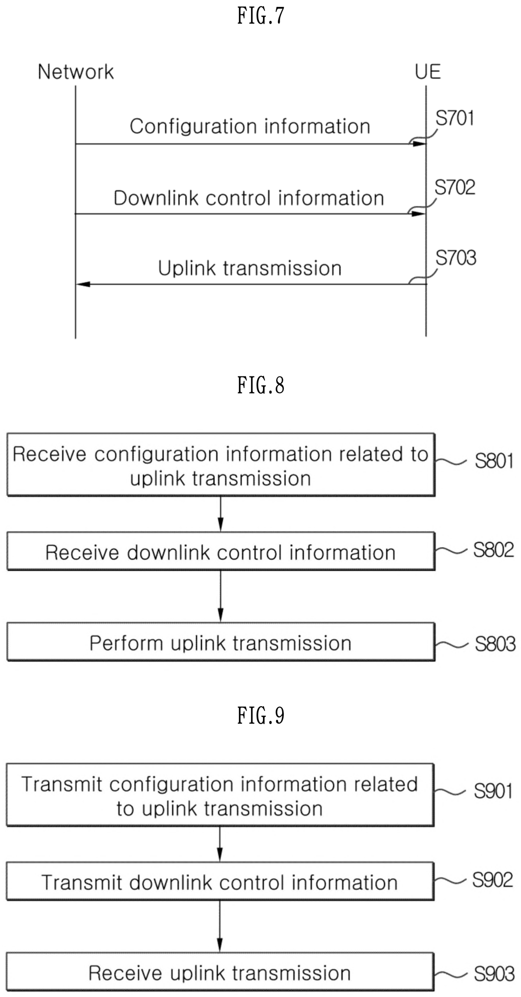

FIG. 7 illustrates a signaling procedure between a network and a UE for an uplink transmission and reception method according to an embodiment of the present disclosure.

FIG. 7 illustrates signaling between a network (e.g., TRP 1, TRP 2) and a UE in a situation of multiple TRPs (i.e., M-TRP, or multi-cell, all TRPs hereinafter may be replaced with cells) to which the methods proposed in the present disclosure may be applied. Here, the UE/network are only examples and may be replaced with various devices. FIG. 7 is merely for convenience of explanation and does not limit the scope of the present disclosure. In addition, some step(s) illustrated in FIG. 7 may be omitted depending on the situation and/or setting.

The signaling scheme described in FIG. 7 can be extended and applied to signaling between multiple TRPs and multiple UEs. In the following description, a network may be one base station including multiple TRPs, and may be one cell including multiple TRPs. For example, an ideal/non-ideal backhaul may be established between TRP 1 and TRP 2 constituting the network. In addition, although the following description is based on multiple TRPs, it can be equally extended and applied to transmission through multiple panels. In addition, in the present disclosure, the operation of the UE receiving a signal from TRP1/TRP2 can also be interpreted/described as (or can be an operation of) the UE receiving a signal from the network (via/using TRP1/2), and the operation of the UE transmitting a signal to TRP1/TRP2 can also be interpreted/described as (or can be an operation of) the UE transmitting a signal to the network (via/using TRP1/TRP2), and vice versa.

A base station may be a general term for an object that performs data transmission and reception with a UE. For example, the base station may be a concept including one or more TPs (Transmission Points), one or more TRPs (Transmission and Reception Points), etc. In addition, the TP and/or TRP may include a panel, a transmission and reception unit, etc. of the base station. In addition, "TRP" may be applied by replacing it with expressions such as panel, antenna array, cell (e.g., macro cell / small cell / pico cell, etc.), transmission point, base station (gNB, etc.). As described above, a TRP may be distinguished according to information (e.g., index, ID) about a CORESET group (or CORESET pool). For example, if a UE is configured to transmit and receive with multiple TRPs (or cells), this may mean that multiple CORESET groups (or CORESET pools) are configured for the UE. The configuration of such CORESET groups (or CORESET pools) may be performed via higher layer signaling (e.g., RRC signaling, etc.).

A UE can receive configuration information from a network via/using TRP 1 (and/or TRP 2) (S701).

The configuration information may include information related to network configuration (e.g., TRP configuration) / information related to M-TRP-based transmission and reception (e.g., resource allocation, etc.). Here, the configuration information may be transmitted through higher layer signaling (e.g., RRC signaling, MAC-CE, etc.).

In addition, the configuration information may include information (e.g., spatial relationship information, TCI state, etc.) for determining a spatial Tx filter for uplink transmission of a DMRS/uplink signal (e.g., SRS) of uplink transmission (e.g., PUSCH, PUCCH). For example, the configuration information may include information for configuring a joint TCI and/or a separate DL/UL TCI. Here, the configuration information may include information (i.e., beam information) for determining one spatial Tx filter for STRP uplink transmission. In addition, the configuration information may include information (hereinafter, first beam information and second beam information) for determining a plurality of spatial Tx filters for MTRP uplink transmission or uplink transmission via multi-panel (i.e., STxMP).

Here, when the uplink transmission is a PUCCH transmission, the first beam information or the second beam information may correspond to a plurality of spatial relation information (i.e., the first spatial relation information and the second spatial relation information) configured for the PUCCH resource determined by the DCI. Alternatively, when the uplink transmission is PUCCH transmission, the plurality of first information, the first beam information and the second beam information may correspond to a plurality of TCI states (e.g., a first TCI state and a second TCI state, etc.) indicated by the DCI for the PUCCH resource determined by the DCI.

In addition, the configuration information may include information related to power control of uplink transmission (e.g., PUSCH, PUCCH) (i.e., power control parameter information). Here, the power control parameter information may include a power control parameter set (e.g., j: index for open-loop parameters Po and alpha, q_d: index of DL RS for PL measurement, l: closed-loop power control process index) for determining power of uplink transmission (e.g., PUSCH, PUCCH). Here, the configuration information may include one power control parameter information for STRP uplink transmission. In addition, the configuration information may include a plurality of power control parameter information (i.e., first power control parameter information and second power control parameter information) for MTRP uplink transmission or uplink transmission via multi-panel (i.e., STxMP).

Here, first information and second information may be configured for the uplink transmission (i.e., in the case of MTRP repeat transmission or STxMP transmission), the first information may include first beam information for determining a spatial transmission filter of the uplink transmission and first power control parameter information related to power control of the uplink transmission, and the second information may include second beam information for determining a spatial transmission filter of the uplink transmission and second power control parameter information related to power control of the uplink transmission.

In addition, for example, the configuration information may include information on an SRS resource set, and at least two SRS resource sets may be configured for the multi-panel PUSCH transmission. Here, as the usage for the SRS resource set is configured as 'codebook' or 'non-codebook', it may be indicated whether the PUSCH transmission scheduled by the DCI referencing the corresponding SRS resource set corresponds to a codebook-based uplink transmission or a non-codebook-based uplink transmission.

Here, if the uplink transmission is a PUSCH transmission, the first information and the second information for the PUSCH transmission may be configured based on a plurality of SRS resource sets identified by a plurality of sounding resource signal (SRS) resource indicator (SRI) fields in the DCI. For example, if two SRI fields are included in the DCI, the first SRI field may indicate an SRS resource defined in SRS resource set 0 and a first power control parameter set, and the second SRI field may indicate an SRS resource defined in SRS resource set 1 and a second power control parameter set. The UE is indicated with information (i.e., first beam information) for determining a first spatial Tx filter toward TRP 1 through the first SRI field, and may perform PUSCH transmission at a transmission occasion (TO) corresponding to SRS resource set 0 through this. Similarly, the UE is indicated with information (i.e., second beam information) for determining a second spatial Tx filter toward TRP 2 through the second SRI field, and may perform PUSCH transmission at a transmission occasion (TO) corresponding to SRS resource set 1 through this.

In addition, the configuration information may include information on the number of repetitions for the uplink transmission. For example, if the uplink transmission is PUCCH transmission, the number of repetitions may be configured for each PUCCH format by a higher layer parameter nrofSlots, or the number of repetitions may be configured for each PUCCH resource by a higher layer parameter pucch-RepetitionNrofSlots. Alternatively, if the uplink transmission is PUSCH transmission, the number of repetitions of the PUSCH may be configured for each higher layer parameter numberOfRepetitions. Here, the number of repetitions configured by the higher layer signaling may correspond to a nominal repetition number.

In addition, the configuration information may include configuration information related to STRP/MTRP uplink transmission or multi-panel (i.e., STxMP) uplink transmission described in the above-described proposed method.

A UE receives downlink control information (DCI) from a network via/using TRP 1 (and/or TRP 2) (S702).

The DCI may be transmitted over a downlink control channel (e.g., PDCCH). The DCI may schedule a STRP PUSCH transmission or a MTRP PUSCH transmission or a multi-panel (STxMP) PUSCH transmission (i.e., including a UL grant).

In addition, the DCI may include an SRS resource set indicator field, a plurality of SRI fields.

Here, based on a value of the SRS resource set indicator field, it may be indicated whether the PUSCH transmission scheduled by the DCI is a STRP PUSCH transmission (e.g., the value of the SRS resource set indicator field is 00 or 01) or an MTRP or multi-panel (STxMP) PUSCH transmission (e.g., the value of the SRS resource set indicator field is 10 or 11).

A UE performs uplink transmission to a network via/using TRP 1 (and/or TRP 2) (S703).

According to an embodiment of the present disclosure, the uplink transmission (i.e., STxMP transmission) may be performed in one of a first transmission scheme in which the uplink transmission is repeatedly transmitted in a plurality of TOs using one of the first information and the second information for each TO based on the number of repetitions for the uplink transmission (i.e., MTRP repeated transmission) or a second transmission scheme in which the uplink transmission is multi-transmitted through a plurality of panels in the same frequency-time resource and the first information or the second information is applied to the uplink transmission for each panel.

For example, based on the number of repetitions being 1, the uplink transmission may be performed using the second transmission method. Alternatively, based on the number of repetitions being 2 or more, the uplink transmission may be performed using the first transmission method.

In addition, the UE may perform the uplink transmission to the base station based on the DCI. For example, if the uplink transmission is a PUCCH, the PUCCH may be transmitted on a PUCCH resource determined by the DCI (e.g., by a PRI field). Alternatively, for example, if the uplink transmission is a PUSCH, the PUSCH may be transmitted on a resource scheduled/allocated by the DCI. In this case, as described above, the first information and the second information for the PUSCH may be configured based on a plurality of SRS resource sets identified by a plurality of SRI fields.

In addition, based on the actual repetition number is different from the information for the repetition number due to one or more invalid symbols in the resources related to the uplink transmission, the uplink transmission method may be performed as one of the first transmission method and the second transmission method in consideration of the actual repetition number.

FIG. 8 illustrates an operation of a UE for an uplink transmission and reception method according to an embodiment of the present disclosure.

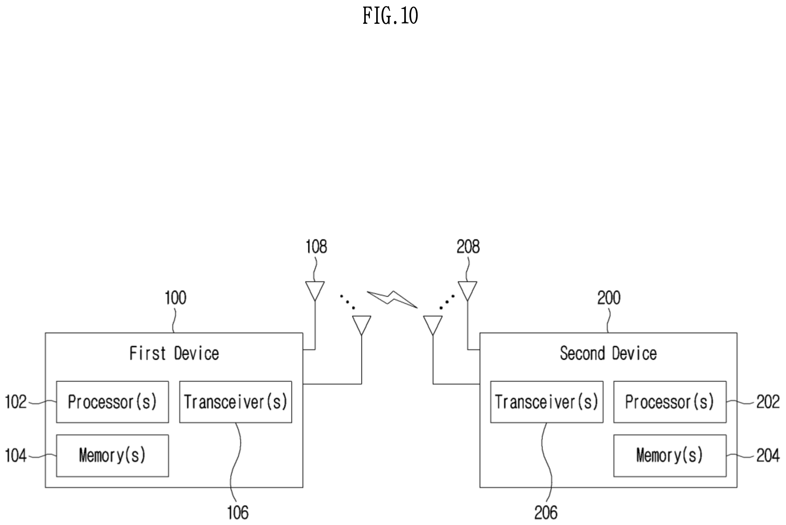

Referring to FIG. 8, FIG. 8 illustrates an operation of a UE based on the proposed methods. The example of FIG. 8 is for convenience of explanation and does not limit the scope of the present disclosure. Some step(s) illustrated in FIG. 8 may be omitted depending on a situation and/or setting. In addition, the UE in FIG. 8 is only an example and may be implemented as a device illustrated in FIG. 20 below. For example, the processor (102/202) of FIG. 10 may control the transceiver (106/206) to transmit and receive channels/signals/data/information, etc., and may also control the processor (102/202) of FIG. 10 to store transmitted or received channels/signals/data/information, etc. in a memory (104/204).

In addition, the operation of FIG. 8 may be processed by one or more processors (102, 202) of FIG. 10, and the operation of FIG. 8 may be stored in a memory (e.g., one or more memories (104, 204) of FIG. 10) in the form of a command/program (e.g., an instruction, an executable code) for driving at least one processor (e.g., 102, 202) of FIG. 10.

A UE receives configuration information related to uplink transmission from a base station (via/using TRP 1 and TRP 2) (S801).

The configuration information may include information (e.g., spatial relationship information, TCI state, etc.) for determining a spatial Tx filter for uplink transmission of a DMRS/uplink signal (e.g., SRS) of uplink transmission (e.g., PUSCH, PUCCH). For example, the configuration information may include information for configuring a joint TCI and/or a separate DL/UL TCI. Here, the configuration information may include information (i.e., beam information) for determining one spatial Tx filter for STRP uplink transmission. In addition, the configuration information may include information (hereinafter, first beam information and second beam information) for determining a plurality of spatial Tx filters for MTRP uplink transmission or uplink transmission via multi-panel (i.e., STxMP).

Here, when the uplink transmission is a PUCCH transmission, the first beam information or the second beam information may correspond to a plurality of spatial relation information (i.e., the first spatial relation information and the second spatial relation information) configured for the PUCCH resource determined by the DCI. Alternatively, when the uplink transmission is PUCCH transmission, the plurality of first information, the first beam information and the second beam information may correspond to a plurality of TCI states (e.g., a first TCI state and a second TCI state, etc.) indicated by the DCI for the PUCCH resource determined by the DCI.

In addition, the configuration information may include information related to power control of uplink transmission (e.g., PUSCH, PUCCH) (i.e., power control parameter information). Here, the power control parameter information may include a power control parameter set (e.g., j: index for open-loop parameters Po and alpha, q_d: index of DL RS for PL measurement, l: closed-loop power control process index) for determining power of uplink transmission (e.g., PUSCH, PUCCH). Here, the configuration information may include one power control parameter information for STRP uplink transmission. In addition, the configuration information may include a plurality of power control parameter information (i.e., first power control parameter information and second power control parameter information) for MTRP uplink transmission or uplink transmission via multi-panel (i.e., STxMP).

Here, first information and second information may be configured for the uplink transmission (i.e., in the case of MTRP repeat transmission or STxMP transmission), the first information may include first beam information for determining a spatial transmission filter of the uplink transmission and first power control parameter information related to power control of the uplink transmission, and the second information may include second beam information for determining a spatial transmission filter of the uplink transmission and second power control parameter information related to power control of the uplink transmission.

In addition, for example, the configuration information may include information on an SRS resource set, and at least two SRS resource sets may be configured for the multi-panel PUSCH transmission. Here, as the usage for the SRS resource set is configured as 'codebook' or 'non-codebook', it may be indicated whether the PUSCH transmission scheduled by the DCI referencing the corresponding SRS resource set corresponds to a codebook-based uplink transmission or a non-codebook-based uplink transmission.

Here, if the uplink transmission is a PUSCH transmission, the first information and the second information for the PUSCH transmission may be configured based on a plurality of SRS resource sets identified by a plurality of sounding resource signal (SRS) resource indicator (SRI) fields in the DCI. For example, if two SRI fields are included in the DCI, the first SRI field may indicate an SRS resource defined in SRS resource set 0 and a first power control parameter set, and the second SRI field may indicate an SRS resource defined in SRS resource set 1 and a second power control parameter set. The UE is indicated with information (i.e., first beam information) for determining a first spatial Tx filter toward TRP 1 through the first SRI field, and may perform PUSCH transmission at a transmission occasion (TO) corresponding to SRS resource set 0 through this. Similarly, the UE is indicated with information (i.e., second beam information) for determining a second spatial Tx filter toward TRP 2 through the second SRI field, and may perform PUSCH transmission at a transmission occasion (TO) corresponding to SRS resource set 1 through this.

In addition, the configuration information may include information on the number of repetitions for the uplink transmission. For example, if the uplink transmission is PUCCH transmission, the number of repetitions may be configured for each PUCCH format by a higher layer parameter nrofSlots, or the number of repetitions may be configured for each PUCCH resource by a higher layer parameter pucch-RepetitionNrofSlots. Alternatively, if the uplink transmission is PUSCH transmission, the number of repetitions of the PUSCH may be configured for each higher layer parameter numberOfRepetitions. Here, the number of repetitions configured by the higher layer signaling may correspond to a nominal repetition number.

In addition, the configuration information may include configuration information related to STRP/MTRP uplink transmission or multi-panel (i.e., STxMP) uplink transmission described in the above-described proposed method.

A UE receives downlink control information (DCI) from a base station (via/using TRP 1 and TRP 2) (S802).

The DCI may be transmitted over a downlink control channel (e.g., PDCCH). The DCI may schedule a STRP PUSCH transmission or a MTRP PUSCH transmission or a multi-panel (STxMP) PUSCH transmission (i.e., including a UL grant).

In addition, the DCI may include an SRS resource set indicator field, a plurality of SRI fields.

Here, based on a value of the SRS resource set indicator field, it may be indicated whether the PUSCH transmission scheduled by the DCI is a STRP PUSCH transmission (e.g., the value of the SRS resource set indicator field is 00 or 01) or an MTRP or multi-panel (STxMP) PUSCH transmission (e.g., the value of the SRS resource set indicator field is 10 or 11).

A UE performs uplink transmission to a base station via/using TRP 1 (and/or TRP 2) (S803).

According to an embodiment of the present disclosure, the uplink transmission (i.e., STxMP transmission) may be performed in one of a first transmission scheme in which the uplink transmission is repeatedly transmitted in a plurality of TOs using one of the first information and the second information for each TO based on the number of repetitions for the uplink transmission (i.e., MTRP repeated transmission) or a second transmission scheme in which the uplink transmission is multi-transmitted through a plurality of panels in the same frequency-time resource and the first information or the second information is applied to the uplink transmission for each panel.

For example, based on the number of repetitions being 1, the uplink transmission may be performed using the second transmission method. Alternatively, based on the number of repetitions being 2 or more, the uplink transmission may be performed using the first transmission method.

In addition, the UE may perform the uplink transmission to the base station based on the DCI. For example, if the uplink transmission is a PUCCH, the PUCCH may be transmitted on a PUCCH resource determined by the DCI (e.g., by a PRI field). Alternatively, for example, if the uplink transmission is a PUSCH, the PUSCH may be transmitted on a resource scheduled/allocated by the DCI. In this case, as described above, the first information and the second information for the PUSCH may be configured based on a plurality of SRS resource sets identified by a plurality of SRI fields.

In addition, based on the actual repetition number is different from the information for the repetition number due to one or more invalid symbols in the resources related to the uplink transmission, the uplink transmission method may be performed as one of the first transmission method and the second transmission method in consideration of the actual repetition number.

FIG. 9 illustrates an operation of a base station for an uplink transmission and reception method according to an embodiment of the present disclosure.

Referring to FIG. 9, FIG. 9 illustrates an operation of a base station based on the proposed methods. The example of FIG. 9 is for convenience of explanation and does not limit the scope of the present disclosure. Some step(s) illustrated in FIG. 9 may be omitted depending on a situation and/or setting. In addition, the base station in FIG. 9 is only an example and may be implemented as a device illustrated in FIG. 10 below. For example, the processor (102/202) of FIG. 10 may control the transceiver (106/206) to transmit and receive channels/signals/data/information, etc., and may also control the processor (102/202) of FIG. 10 to store transmitted or received channels/signals/data/information, etc. in a memory (104/204) .

In addition, the operation of FIG. 9 may be processed by one or more processors (102, 202) of FIG. 10, and the operation of FIG. 9 may be stored in a memory (e.g., one or more memories (104, 204) of FIG. 10) in the form of a command/program (e.g., an instruction, an executable code) for driving at least one processor (e.g., 102, 202) of FIG. 10.

A base station transmits configuration information related to uplink transmission to a UE (via/using TRP 1 (and/or TRP 2)) (S901).

The configuration information may include information (e.g., spatial relationship information, TCI state, etc.) for determining a spatial Tx filter for uplink transmission of a DMRS/uplink signal (e.g., SRS) of uplink transmission (e.g., PUSCH, PUCCH). For example, the configuration information may include information for configuring a joint TCI and/or a separate DL/UL TCI. Here, the configuration information may include information (i.e., beam information) for determining one spatial Tx filter for STRP uplink transmission. In addition, the configuration information may include information (hereinafter, first beam information and second beam information) for determining a plurality of spatial Tx filters for MTRP uplink transmission or uplink transmission via multi-panel (i.e., STxMP).

Here, when the uplink transmission is a PUCCH transmission, the first beam information or the second beam information may correspond to a plurality of spatial relation information (i.e., the first spatial relation information and the second spatial relation information) configured for the PUCCH resource determined by the DCI. Alternatively, when the uplink transmission is PUCCH transmission, the plurality of first information, the first beam information and the second beam information may correspond to a plurality of TCI states (e.g., a first TCI state and a second TCI state, etc.) indicated by the DCI for the PUCCH resource determined by the DCI.

In addition, the configuration information may include information related to power control of uplink transmission (e.g., PUSCH, PUCCH) (i.e., power control parameter information). Here, the power control parameter information may include a power control parameter set (e.g., j: index for open-loop parameters Po and alpha, q_d: index of DL RS for PL measurement, l: closed-loop power control process index) for determining power of uplink transmission (e.g., PUSCH, PUCCH). Here, the configuration information may include one power control parameter information for STRP uplink transmission. In addition, the configuration information may include a plurality of power control parameter information (i.e., first power control parameter information and second power control parameter information) for MTRP uplink transmission or uplink transmission via multi-panel (i.e., STxMP).

Here, first information and second information may be configured for the uplink transmission (i.e., in the case of MTRP repeat transmission or STxMP transmission), the first information may include first beam information for determining a spatial transmission filter of the uplink transmission and first power control parameter information related to power control of the uplink transmission, and the second information may include second beam information for determining a spatial transmission filter of the uplink transmission and second power control parameter information related to power control of the uplink transmission.

In addition, for example, the configuration information may include information on an SRS resource set, and at least two SRS resource sets may be configured for the multi-panel PUSCH transmission. Here, as the usage for the SRS resource set is configured as 'codebook' or 'non-codebook', it may be indicated whether the PUSCH transmission scheduled by the DCI referencing the corresponding SRS resource set corresponds to a codebook-based uplink transmission or a non-codebook-based uplink transmission.

Here, if the uplink transmission is a PUSCH transmission, the first information and the second information for the PUSCH transmission may be configured based on a plurality of SRS resource sets identified by a plurality of sounding resource signal (SRS) resource indicator (SRI) fields in the DCI. For example, if two SRI fields are included in the DCI, the first SRI field may indicate an SRS resource defined in SRS resource set 0 and a first power control parameter set, and the second SRI field may indicate an SRS resource defined in SRS resource set 1 and a second power control parameter set. The UE is indicated with information (i.e., first beam information) for determining a first spatial Tx filter toward TRP 1 through the first SRI field, and may perform PUSCH transmission at a transmission occasion (TO) corresponding to SRS resource set 0 through this. Similarly, the UE is indicated with information (i.e., second beam information) for determining a second spatial Tx filter toward TRP 2 through the second SRI field, and may perform PUSCH transmission at a transmission occasion (TO) corresponding to SRS resource set 1 through this.

In addition, the configuration information may include information on the number of repetitions for the uplink transmission. For example, if the uplink transmission is PUCCH transmission, the number of repetitions may be configured for each PUCCH format by a higher layer parameter nrofSlots, or the number of repetitions may be configured for each PUCCH resource by a higher layer parameter pucch-RepetitionNrofSlots. Alternatively, if the uplink transmission is PUSCH transmission, the number of repetitions of the PUSCH may be configured for each higher layer parameter numberOfRepetitions. Here, the number of repetitions configured by the higher layer signaling may correspond to a nominal repetition number.

In addition, the configuration information may include configuration information related to STRP/MTRP uplink transmission or multi-panel (i.e., STxMP) uplink transmission described in the above-described proposed method.

A base station transmits downlink control information (DCI) to a UE (via/using TRP 1 and TRP 2) (S902).

The DCI may be transmitted over a downlink control channel (e.g., PDCCH). The DCI may schedule a STRP PUSCH transmission or a MTRP PUSCH transmission or a multi-panel (STxMP) PUSCH transmission (i.e., including a UL grant).

In addition, the DCI may include an SRS resource set indicator field, a plurality of SRI fields.

Here, based on a value of the SRS resource set indicator field, it may be indicated whether the PUSCH transmission scheduled by the DCI is a STRP PUSCH transmission (e.g., the value of the SRS resource set indicator field is 00 or 01) or an MTRP or multi-panel (STxMP) PUSCH transmission (e.g., the value of the SRS resource set indicator field is 10 or 11).

A base station receives an uplink transmission from a UE via/using TRP 1 (and/or TRP 2) (S903).

According to an embodiment of the present disclosure, the uplink transmission (i.e., STxMP transmission) may be performed in one of a first transmission scheme in which the uplink transmission is repeatedly transmitted in a plurality of TOs using one of the first information and the second information for each TO based on the number of repetitions for the uplink transmission (i.e., MTRP repeated transmission) or a second transmission scheme in which the uplink transmission is multi-transmitted through a plurality of panels in the same frequency-time resource and the first information or the second information is applied to the uplink transmission for each panel.

For example, based on the number of repetitions being 1, the uplink transmission may be performed using the second transmission method. Alternatively, based on the number of repetitions being 2 or more, the uplink transmission may be performed using the first transmission method.

In addition, the base station can receive the uplink transmission from the UE based on the DCI. For example, if the uplink transmission is a PUCCH, the PUCCH may be transmitted on a PUCCH resource determined by the DCI (e.g., by a PRI field). Alternatively, for example, if the uplink transmission is a PUSCH, the PUSCH may be transmitted on a resource scheduled/allocated by the DCI. In this case, as described above, the first information and the second information for the PUSCH may be configured based on a plurality of SRS resource sets identified by a plurality of SRI fields.

In addition, based on the actual repetition number is different from the information for the repetition number due to one or more invalid symbols in the resources related to the uplink transmission, the uplink transmission method may be performed as one of the first transmission method and the second transmission method in consideration of the actual repetition number.

General Device to which the Present Disclosure may be applied

FIG. 10 is a diagram which illustrates a block diagram of a wireless communication device according to an embodiment of the present disclosure.

In reference to FIG. 10, a first wireless device 100 and a second wireless device 200 may transmit and receive a wireless signal through a variety of radio access technologies (e.g., LTE, NR) .

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs (Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN (personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.  A method performed by a user equipment (UE) in a wireless communication system, the method comprising:

    receiving configuration information related to uplink transmission from a base station, wherein the configuration information includes information on a repetition number for the uplink transmission;
    receiving downlink control information (DCI) from the base station; and
    performing the uplink transmission to the base station based on the DCI,
    wherein for the uplink transmission, i) first information including first beam information for determining a spatial transmission filter of the uplink transmission and first power control parameter information related to power control of the uplink transmission and ii) second information including second beam information for determining a spatial transmission filter of the uplink transmission and second power control parameter information related to power control of the uplink transmission are configured, and
    wherein based on the repetition number, the uplink transmission is performed in one of a first transmission method in which the uplink transmission is repeatedly transmitted in a plurality of transmission occasions (TOs) using one of the first information and the second information for each TO or a second transmission method in which the uplink transmission is multi-transmitted through a plurality of panels in a same frequency-time resource and the first information or the second information is applied to the uplink transmission for each panel.

2.  The method of claim 1, wherein based on the repetition number being 1, the uplink transmission is performed in the second transmission method.

3.  The method of claim 1, wherein based on the repetition number being 2 or more, the uplink transmission is performed in the first transmission method.

4.  The method of claim 1, wherein the uplink transmission is a PUCCH (physical uplink control channel) transmission corresponding to the DCI, and
    wherein the first beam information or the second beam information is a plurality of pieces of spatial relation information configured for the PUCCH resource determined by the DCI.

5. The method of claim 1, wherein the uplink transmission is a PUCCH (physical uplink control channel) transmission corresponding to the DCI, and
wherein the first beam information and the second beam information are a plurality of transmission configuration indicator (TCI) states indicated by the DCI for a PUCCH resource determined in the DCI.

6. The method of claim 1, wherein the uplink transmission is a PUSCH (physical uplink control channel) transmission scheduled by the DCI, and
wherein the first information and the second information are configured based on a plurality of sounding resource signal (SRS) resource sets identified by a plurality of SRS resource indicator (SRI) fields in the DCI.

7. The method of claim 1, wherein based on an actual repetition number is different from the information for the repetition number due to one or more invalid symbols in the resources related to the uplink transmission, the uplink transmission method is performed as one of the first transmission method and the second transmission method in consideration of the actual repetition number.

8. A user equipment (UE) operating in a wireless communication system, the UE comprising:

   at least one transceiver for transmitting and receiving a wireless signal; and
   at least one processor for controlling the at least one transceiver,
   wherein the at least one processor configured to:

   receive configuration information related to uplink transmission from a base station, wherein the configuration information includes information on a repetition number for the uplink transmission;
   receive downlink control information (DCI) from the base station; and
   perform the uplink transmission to the base station based on the DCI,
   wherein for the uplink transmission, i) first information including first beam information for determining a spatial transmission filter of the uplink transmission and first power control parameter information related to power control of the uplink transmission and ii) second information including second beam information for determining a spatial transmission filter of the uplink transmission and second power control parameter information related to power control of the uplink transmission are configured, and
   wherein based on the repetition number, the uplink transmission is performed in one of a first transmission method in which the uplink transmission is repeatedly transmitted in a plurality of transmission occasions (TOs) using one of the first information and the second information for each TO or a second transmission method in which the uplink transmission is multi-transmitted through a plurality of panels in a same frequency-time resource and the first information or the second information is applied to the uplink transmission for each panel.

9. At least one non-transitory computer-readable medium storing at least one instruction, wherein the at least one instruction executable by at least one processor controls a user equipment (UE) to:

   receive configuration information related to uplink transmission from a base station, wherein the configuration information includes information on a repetition number for the uplink transmission;
   receive downlink control information (DCI) from the base station; and
   perform the uplink transmission to the base station based on the DCI,
   wherein for the uplink transmission, i) first information including first beam information for determining a spatial transmission filter of the uplink transmission and first power control parameter information related to power control of the uplink transmission and ii) second information including second beam information for determining a spatial transmission filter of the uplink transmission and second power control parameter information related to power control of the uplink transmission are configured, and
   wherein based on the repetition number, the uplink transmission is performed in one of a first transmission method in which the uplink transmission is repeatedly transmitted in a plurality of transmission occasions (TOs) using one of the first information and the second information for each TO or a second transmission method in which the uplink transmission is multi-transmitted through a plurality of panels in a same frequency-time resource and the first information or the second information is applied to the uplink transmission for each panel.

10. A processing apparatus configured to control a user equipment (UE) in a wireless communication system, the processing apparatus comprising:

at least one processor; and
at least one computer memory operably connected to the at least one processor and storing instructions that, based on being executed by the at least one processor, perform operations comprising:

receiving configuration information related to uplink transmission from a base station, wherein the configuration information includes information on a repetition number for the uplink transmission;
receiving downlink control information (DCI) from the base station; and
performing the uplink transmission to the base station based on the DCI,
wherein for the uplink transmission, i) first information including first beam information for determining a spatial transmission filter of the uplink transmission and first power control parameter information related to power control of the uplink transmission and ii) second information including second beam information for determining a spatial transmission filter of the uplink transmission and second power control parameter information related to power control of the uplink transmission are configured, and
wherein based on the repetition number, the uplink transmission is performed in one of a first transmission method in which the uplink transmission is repeatedly transmitted in a plurality of transmission occasions (TOs) using one of the first information and the second information for each TO or a second transmission method in which the uplink transmission is multi-transmitted through a plurality of panels in a same frequency-time resource and the first information or the second information is applied to the uplink transmission for each panel.

11. A method performed by a base station in a wireless communication system, the method comprising:

transmitting configuration information related to uplink transmission to a user equipment (UE), wherein the configuration information includes information on a repetition number for the uplink transmission;
transmitting downlink control information (DCI) to the UE; and
receiving the uplink transmission from the UE based on the DCI,
wherein for the uplink transmission, i) first information including first beam information for determining a spatial transmission filter of the uplink transmission and first power control parameter information related to power control of the uplink transmission and ii) second information including second beam information for determining a spatial transmission filter of the uplink transmission and second power control parameter information related to power control of the uplink transmission are configured, and
wherein based on the repetition number, the uplink transmission is performed in one of a first transmission method in which the uplink transmission is repeatedly transmitted in a plurality of transmission occasions (TOs) using one of the first information and the second information for each TO or a second transmission method in which the uplink transmission is multi-transmitted through a plurality of panels in a same frequency-time resource and the first information or the second information is applied to the uplink transmission for each panel.

12. A base station operating in a wireless communication system, the base station comprising:

at least one transceiver for transmitting and receiving a wireless signal; and
at least one processor for controlling the at least one transceiver,
wherein the at least one processor configured to:

transmit configuration information related to uplink transmission to a user equipment (UE), wherein the configuration information includes information on a repetition number for the uplink transmission;
transmit downlink control information (DCI) to the UE; and
receive the uplink transmission from the UE based on the DCI,
wherein for the uplink transmission, i) first information including first beam information for determining a spatial transmission filter of the uplink transmission and first power control parameter information related to power control of the uplink transmission and ii) second information including second beam information for determining a spatial transmission filter of the uplink transmission and second power control parameter information related to power control of the uplink transmission are configured, and
wherein based on the repetition number, the uplink transmission is performed in one of a first transmission method in which the uplink transmission is repeatedly transmitted in a plurality of transmission occasions (TOs) using one of the first information and the second information for each TO or a second transmission method in which the uplink transmission is multi-transmitted through a plurality of panels in a same frequency-time resource and the first information or the second information is applied to the uplink transmission for each panel.

FIG.1

FIG.2

Radio Frame 10ms

Subframe 1ms

Fixed Size

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot={2,4,7} Symbols

FIG.3

FIG.4

# FIG.5

## FIG.6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601　　S602　　S603　S604　　S605　　S606　　S607　　S608

· DL/UL ACK/NACK
· UE CQI/PMI RI REPORT
　USING PUSCH AND PUCCH

## FIG.7

Network ......... UE

Configuration information — S701

Downlink control information — S702

Uplink transmission — S703

## FIG.8

| Receive configuration information related to uplink transmission | — S801 |

| Receive downlink control information | — S802 |

| Perform uplink transmission | — S803 |

## FIG.9

| Transmit configuration information related to uplink transmission | — S901 |

| Transmit downlink control information | — S902 |

| Receive uplink transmission | — S903 |

EP 4 657 954 A1

# FIG.10

## INTERNATIONAL SEARCH REPORT

| International application No. |
| --- |
| **PCT/KR2024/001172** |

| A. | CLASSIFICATION OF SUBJECT MATTER |
| --- | --- |

**H04W 72/21**(2023.01)i; **H04W 72/232**(2023.01)i; **H04L 1/08**(2006.01)i; **H04W 72/04**(2009.01)i; **H04W 72/231**(2023.01)i

According to International Patent Classification (IPC) or to both national classification and IPC

| B. | FIELDS SEARCHED |
| --- | --- |

Minimum documentation searched (classification system followed by classification symbols)

H04W 72/21(2023.01); H04B 7/024(2017.01); H04B 7/06(2006.01); H04L 1/08(2006.01); H04L 27/26(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상향링크(uplink), 반복(repetition), 횟수(number), 공간필터(spatial filter), 전력 (power)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0053510 A (SAMSUNG ELECTRONICS CO., LTD.) 29 April 2022 (2022-04-29)<br>See paragraphs [0010]-[0453]; and claim 5. | 1-12 |
| Y | INTEL CORPORATION. UL precoding indication for multi-panel transmission. R1-2211387, 3GPP TSG RAN WG1 #111. 07 November 2022.<br>See sections 2-5.1. | 1-12 |
| Y | WO 2021-020955 A1 (WILUS INSTITUTE OF STANDARDS AND TECHNOLOGY INC.) 04 February 2021 (2021-02-04)<br>See paragraphs [0147]-[0230]. | 7 |
| A | JP 2021-521673 A (SAMSUNG ELECTRONICS CO., LTD.) 26 August 2021 (2021-08-26)<br>See paragraphs [0153]-[0162]. | 1-12 |
| A | QUALCOMM INCORPORATED. Simultaneous multi-panel transmission. R1-2212104, 3GPP TSG RAN WG1 #111. 05 November 2022.<br>See sections 2-5. | 1-12 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 May 2024** | **03 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
|---|
| **PCT/KR2024/001172** |

| Patent document cited in search report | | | Publication date (day/month/year) | Patent family member(s) | | | Publication date (day/month/year) |
|---|---|---|---|---|---|---|---|
| KR | 10-2022-0053510 | A | 29 April 2022 | CN | 116530044 | A | 01 August 2023 |
| | | | | EP | 4216644 | A1 | 26 July 2023 |
| | | | | US | 2023-0224824 | A1 | 13 July 2023 |
| | | | | WO | 2022-086291 | A1 | 28 April 2022 |
| WO | 2021-020955 | A1 | 04 February 2021 | CN | 114175830 | A | 11 March 2022 |
| | | | | DE | 202020005739 | U1 | 17 August 2022 |
| | | | | EP | 3996315 | A1 | 11 May 2022 |
| | | | | JP | 2022-543380 | A | 12 October 2022 |
| | | | | JP | 2024-008986 | A | 19 January 2024 |
| | | | | JP | 2024-008987 | A | 19 January 2024 |
| | | | | JP | 7384488 | B2 | 21 November 2023 |
| | | | | KR | 10-2022-0037438 | A | 24 March 2022 |
| | | | | KR | 10-2023-0106740 | A | 13 July 2023 |
| | | | | KR | 10-2023-0107406 | A | 14 July 2023 |
| | | | | KR | 10-2583258 | B1 | 27 September 2023 |
| | | | | TW | 202123643 | A | 16 June 2021 |
| | | | | US | 11570803 | B2 | 31 January 2023 |
| | | | | US | 2022-0150928 | A1 | 12 May 2022 |
| | | | | US | 2023-0117330 | A1 | 20 April 2023 |
| | | | | US | 2023-0199759 | A1 | 22 June 2023 |
| JP | 2021-521673 | A | 26 August 2021 | CN | 111971924 | A | 20 November 2020 |
| | | | | EP | 3759862 | A1 | 06 January 2021 |
| | | | | EP | 3759862 | B1 | 04 October 2023 |
| | | | | JP | 7336456 | B2 | 31 August 2023 |
| | | | | KR | 10-2020-0129124 | A | 17 November 2020 |
| | | | | RU | 2764461 | C1 | 17 January 2022 |
| | | | | US | 10708866 | B2 | 07 July 2020 |
| | | | | US | 2019-0313342 | A1 | 10 October 2019 |
| | | | | WO | 2019-194655 | A1 | 10 October 2019 |

Form PCT/ISA/210 (patent family annex) (July 2022)